# EUROPEAN PATENT APPLICATION

(11) **EP 2 263 914 A1**
(43) Date of publication of application: **22.12.2010**
(21) Application number: 09166748.5
(22) Date of filing: 29.07.2009
(51) Int. Cl.: B60Q 1/068

(54) **Adjusting device for reflecting mirror**

(30) Priority: 11.05.2009 TW 98115591
(71) Applicant: TYC Brother Industrial Co., Ltd., Tainan 702 (TW)
(72) Inventor: Thao, Yu-Bin, 702 Tainan (TW)
(74) Representative: 2K Patentanwälte Blasberg Kewitz & Reichel

(57) **Abstract**

An adjusting device (10) for a reflecting mirror (60) includes a driving device (20), a first linkage device (30), a second linkage device (40), a shifting device (50), and a limiting device (61). The driving device (20) drives the first linkage device (30) and the second linkage device (40) to rotate and enables the shifting device (50) to relatively move on the limiting device (61) of the reflecting mirror (60), so as to adjust an angle of the reflecting mirror (60). The driving device (20), the first linkage device (30), the second linkage device (40), the shifting device (50), and the limiting device (61) of the reflecting mirror (60) provided by the present invention are simple in structure and easy to assemble, thereby lowering the total manufacturing cost of the adjusting device for a reflecting mirror of the present invention, and reducing damages to the components so as to prolong service life.

## Description

### BACKGROUND OF THE INVENTION

### FIELD OF THE INVENTION

The present invention relates to an adjusting device for a reflecting mirror, so as to adjust an angle of the reflecting mirror.

### DESCRIPTION OF THE RELATED ART

A conventional reflecting mirror can be applied to a vehicle lamp. In order to adjust an angle of the conventional reflecting mirror to achieve an effect of a headlight on full beam or a dipped headlight, a driving device is provided in the reflecting mirror. Referring to Patent Publication No. WO2008/127203A1, a gear and a driving gear disposed around a reflecting mirror are used to drive the entire reflecting mirror, so as to adjust an angle of the reflecting mirror.

Further referring to Patent Publication No. WO2006/025804A1, a plurality of gears and a driving device are used to drive an entire reflecting mirror, so as to adjust an angle of the reflecting mirror. In this patent, the components of the driving device are complex, easily damaged, and difficult to repair.

Therefore, there is need for providing an adjusting device for a reflecting mirror to solve the above problems.

### SUMMARY OF THE INVENTION

Accordingly, the present invention is directed to an adjusting device for a reflecting mirror, which includes a driving device, a first linkage device, a second linkage device, a shifting device, and a limiting device. The driving device receives a driving force so as to be actuated. The first linkage device is connected to the driving device, so as to be driven to rotate by the driving device. The second linkage device is connected to the first linkage device, so as to be driven to rotate by the first linkage device. The shifting device is connected to the second linkage device, so as to be driven by the second linkage device to move. The limiting device is disposed on the reflecting mirror and connected to the shifting device, such that the shifting device relatively moves on the limiting device, so as to adjust an angle of the reflecting mirror.

The driving device, the first linkage device, the second linkage device, the shifting device, and the limiting device of the reflecting mirror provided by the present invention can be used to adjust an angle of the reflecting mirror. Further, the driving device, the first linkage device, the second linkage device, the shifting device, and the limiting device of the reflecting mirror provided by the present invention are simple in structure and easy to assemble, thereby lowering the total manufacturing cost of the adjusting device for the reflecting mirror of the present invention, reducing damage to the components so as to prolong service life.

### BRIEF DESCRIPTION OF THE DRAWINGS

FIG. 1 is a schematic view of an adjusting device for a reflecting mirror according to the present invention;
FIG. 2 is a schematic exploded view of the adjusting device for the reflecting mirror according to the present invention;
FIG. 3 is a schematic operational view of the adjusting device for the reflecting mirror according to the present invention.
FIG. 4 is a schematic combined view of the reflecting mirror and a case according to the present invention (in which a first linkage device, a second linkage device, and a shifting device are not shown); and
FIG. 5 is a schematic combined view of a bump and an accommodating slot according to the present invention.

### DETAILED DESCRIPTION OF THE INVENTION

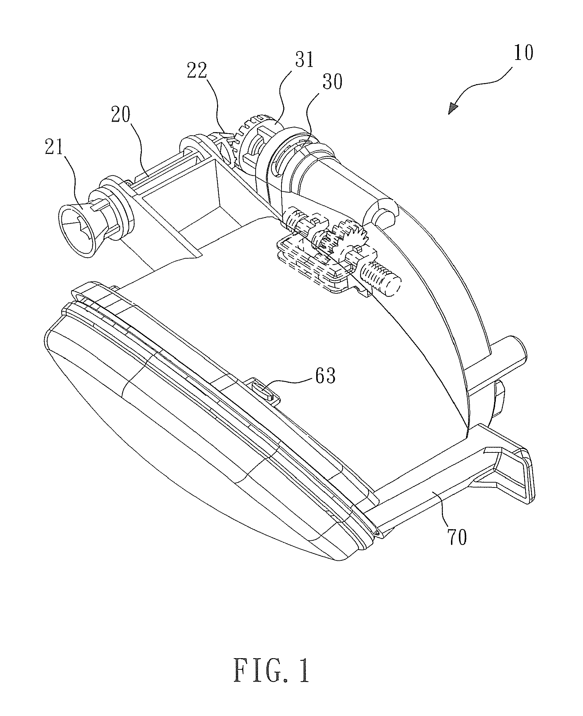

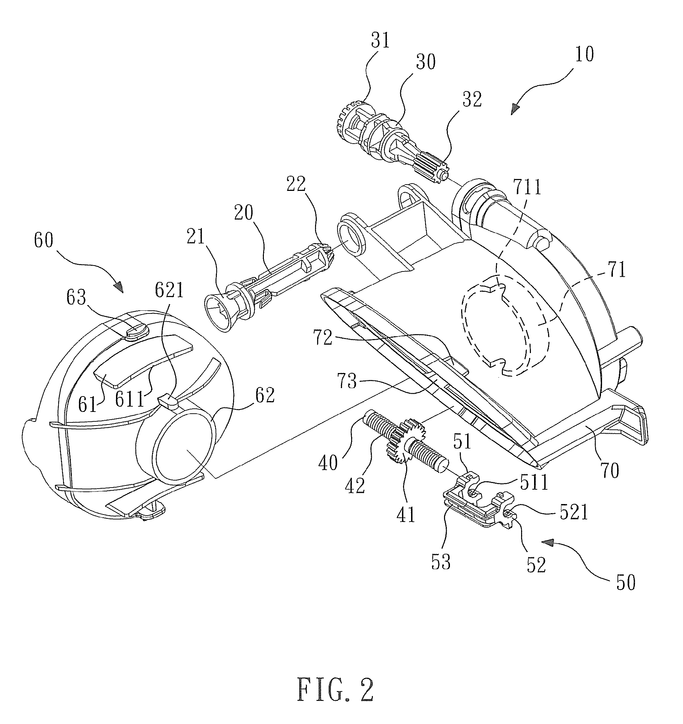

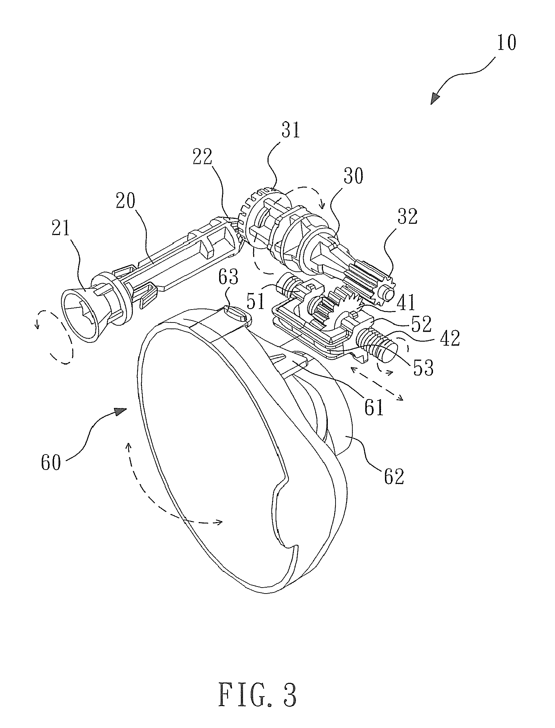

FIG. 1 is a schematic view of an adjusting device for a reflecting mirror according to the present invention. FIG. 2 is a schematic exploded view of the adjusting device for the reflecting mirror according to the present invention. FIG. 3 is a schematic operational view of the adjusting device for the reflecting mirror according to the present invention. Referring to FIGs. 1, 2, and 3, the adjusting device 10 for the reflecting mirror according to the present invention includes a driving device 20, a first linkage device 30, a second linkage device 40, a shifting device 50, and a limiting device 61. The driving device 20 receives a driving force so as to be actuated. In this embodiment, the driving device 20 is an adjusting rod, having a knob 21 and a first gear 22 respectively disposed on two ends of the adjusting rod 20. The driving device 20 is actuated through the knob 21.

The first linkage device 30 is connected to the driving device 20, so as to be driven to rotate by the driving device 20. In this embodiment, the first linkage device 30 is a first linkage rod, having a second gear 31 and a third gear 32 respectively disposed on two ends of the first linkage rod. The first linkage device 30 and the driving device 20 are perpendicularly disposed, and the second gear 31 is engaged with the first gear 22, so that the driving device 20 drives the first linkage device 30 to rotate.

The second linkage device 40 is connected to the first linkage device 30, so as to be driven to rotate by the first linkage device 30. In this embodiment, the second linkage device 40 is a second linkage rod, having a fourth gear 41 and a plurality of screw threads 42. The fourth gear 41 is disposed on the center of the second linkage rod, the screw threads 42 are disposed on two sides of the second linkage rod 40, and the fourth gear 41 is engaged with the third gear 32, so that the first linkage device 30 drives the second linkage device 40 to rotate.

The shifting device 50 is connected to the second linkage device 40, so as to be driven to move by the second linkage device 40. In this embodiment, the shifting device 50 has two snap rings 51, 52 and a cross rod 53. The two snap rings 51 and 52 are disposed on two ends of the shifting device 50, the cross rod 53 is connected to the two snap rings 51 and 52, and a plurality of screw threads 511 and 521 is formed on inner sides of the two snap rings 51 and 52 so as to be engaged with the screw threads 42 on the two sides of the second linkage device 40, such that the second linkage device 40 rotates to drive the shifting device 50 to move.

The limiting device 61 is disposed on the reflecting mirror 60, and is connected to the shifting device 50, such that the shifting device 50 relatively moves on the limiting device 61, so as to adjust an angle of the reflecting mirror 60.

In this embodiment, the cross rod 53 has a recess, and the limiting device 61 is a limiting board accommodated in the recess, such that the shifting device 50 relatively moves on the limiting board. In addition, a contact surface of the limiting board to the recess is a camber 611, and different cambers may be designed to match with the adjusted angle of the reflecting mirror 60.

In other applications, the cross rod has a protruding portion, and the limiting device is a limiting recess for accommodating the protruding portion so that the shifting device relatively moves on the limiting recess. In addition, a contact surface of the limiting recess to the protruding portion is a camber, and different cambers may be designed to match with the adjusted angle of the reflecting mirror.

Preferably, in this embodiment, the two snap rings 51 and 52 are C-shaped snap rings. When the shifting device 50 moves to a limit position of two sides, if the knob 21 of the driving device 20 continues to rotate and drive the first linkage device 30 and the second linkage device 40 to rotate, the two C-shaped snap rings 51 and 52 are slightly enlarged so as to prevent the screw threads 42 of the second linkage device 40 and the screw threads 511 and 521 formed on the inner sides of the two C-shaped snap ring 51 and 52 from being damaged.

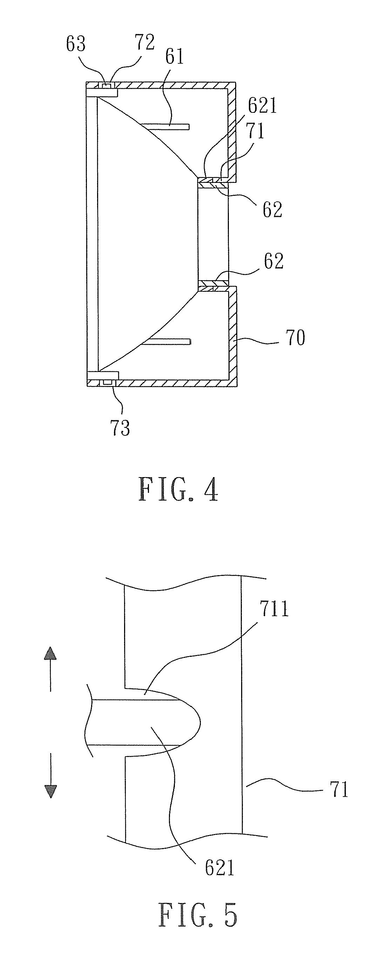

Referring to FIGs. 2, 4, and 5, the reflecting mirror 60 further includes a first bulb hole 62 for accommodating a bulb (not shown). The first bulb hole 62 has at least one bump 621, formed on the periphery of the first bulb hole 62, and disposed in at least one accommodating slot 711 of a case 70. The accommodating slot 711 is disposed on the periphery of a second bulb hole 71 and at a position corresponding to the bump 621. The size of the second bulb hole 71 is larger than that of the first bulb hole 62, and the first bulb hole 62 is accommodated in the second bulb hole 71. The shape of the bottom of the bump 621 matches with that of the bottom of the accommodating slot 711, such that the bump 621 leans against the accommodating slot 711, but the peripheral size of the accommodating slot 711 is larger than that of the bump 621 (referring to FIG. 5). When the shifting device 50 relatively moves on the limiting device 61 to adjust the angle of the reflecting mirror 60, the bump 621 may move within a peripheral space in the accommodating slot 711, and thus the reflecting mirror 60 has a marginal space for adjusting its upper and lower angles.

In addition, the reflecting mirror 60 further includes at least one snapping member 63, disposed in at least one snapping slot 72, 73 of the case 70. The size of the snapping slot 72 is larger than that of the snapping member 63, so that the reflecting mirror 60 has a marginal space for adjusting its upper and lower angles.

In this embodiment, the adjusting device 10 for the reflecting mirror provided by the present invention may be applied to a vehicle lamp. When the angle of the reflecting mirror 60 is slightly adjusted upwards, the light rays are irradiated to farther places so that the lamp functions as a headlight on full beam. When the angle of the reflecting mirror 60 is slightly adjusted downwards, the light rays are irradiated to nearer places so that the lamp functions as a dipped headlight.

The driving device 20, the first linkage device 30, the second linkage device 40, the shifting device 50, and the limiting device 61 of the reflecting mirror 60 provided by the present invention can be used to adjust an angle of the reflecting mirror 60. Further, the driving device 20, the first linkage device 30, the second linkage device 40, the shifting device 50, and the limiting device 61 of the reflecting mirror 60 provided by the present invention are simple in structure and easy to assemble, thereby lowering the total manufacturing cost of the adjusting device for the reflecting mirror of the present invention, and reducing damage to the components so as to prolong service life.

In summary there is disclosed an adjusting device for a reflecting mirror including a driving device, a first linkage device, a second linkage device, a shifting device, and a limiting device. The driving device drives the first linkage device and the second linkage device to rotate and enables the shifting device to relatively move on the limiting device of the reflecting mirror, so as to adjust an angle of the reflecting mirror. The driving device, the first linkage device, the second linkage device, the shifting device, and the limiting device of the reflecting mirror provided by the present invention are simple in structure and easy to assemble, thereby lowering the total manufacturing cost of the adjusting device for a reflecting mirror of the present invention, and reducing damages to the components so as to prolong service life.

While the embodiments of the present invention have been illustrated and described, various modifications and improvements can be made by those skilled in the art. The embodiments of the present invention are therefore described in an illustrative but not restrictive sense. It is intended that the present invention may not be limited to the particular forms as illustrated, and that all modifications that maintain the spirit and scope of the present invention are within the scope as defined in the appended claims.

## Claims

1. An adjusting device (10) for a reflecting mirror (60),
**characterized in** comprising:
a driving device (20), for receiving a driving force so as to be actuated;
a first linkage device (30), connected to the driving device (20), so as to be driven to rotate by the driving device (20);
a second linkage device (40), connected to the first linkage device (30), so as to be driven to rotate by the first linkage device (30);
a shifting device (50), connected to the second linkage device (40), so as to be driven to move by the second linkage device (40); and
a limiting device (61), disposed on the reflecting mirror (60), and connected to the shifting device (50), such that the shifting device (50) relatively moves on the limiting device (61), so as to adjust an angle of the reflecting mirror (60).

2. The adjusting device (10) for the reflecting mirror (60) according to Claim 1, wherein the driving device (20) is an adjusting rod, having a knob (21) and a first gear (22) respectively disposed on two ends of the adjusting rod.

3. The adjusting device (10) for the reflecting mirror (60) according to Claim 2, wherein the first linkage device (30) is a first linkage rod, having a second gear (31) and a third gear (32) respectively disposed on two ends of the first linkage rod, the first linkage device (30) and the driving device (20) are perpendicularly disposed, and the second gear (31) is engaged with the first gear (22), such that the driving device (20) drives the first linkage device (30) to rotate.

4. The adjusting device (10) for the reflecting mirror (60) according to Claim 3, wherein the second linkage device (40) is a second linkage rod, having a fourth gear (41) and a plurality of screw threads (42), the fourth gear (41) is disposed on the center of the second linkage rod, the screw threads (42) are formed on two sides of the second linkage rod, and the fourth gear (41) is engaged with the third gear (32), such that the first linkage device (30) drives the second linkage device (40) to rotate.

5. The adjusting device (10) for the reflecting mirror (60) according to Claim 4, wherein the shifting device (50) has two snap rings (51, 52) and a cross rod (53), the two snap rings (51, 52) are disposed on two ends of the shifting device (50), the cross rod (53) is connected to the two snap rings (51, 52), and a plurality of screw threads (511, 521) is formed on inner sides of the two snap rings (51, 52) so as to be engaged with the screw threads (42) on the two sides of the second linkage device (40), such that the second linkage device (40) drives the shifting device (50) to move.

6. The adjusting device (10) for the reflecting mirror (60) according to Claim 5, wherein the cross rod (53) has a recess, and the limiting device (61) is a limiting board accommodated in the recess, such that the shifting device (50) relatively moves on the limiting board.

7. The adjusting device (10) for the reflecting mirror (60) according to Claim 6, wherein a contact surface (611) of the limiting board to the recess is a camber.

8. The adjusting device (10) for the reflecting mirror (60) according to Claim 5, wherein the cross rod (53) has a protruding portion, and the limiting device (61) is a limiting recess for accommodating the protruding portion, such that the shifting device (50) relatively moves on the limiting recess.

9. The adjusting device (10) for the reflecting mirror (60) according to Claim 8, wherein a contact surface (611) of the limiting recess to the protruding portion is a camber.

10. The adjusting device (10) for the reflecting mirror (60) according to Claim 5, wherein the two snap rings (51, 52) are C-shaped snap rings.

11. The adjusting device (10) for the reflecting mirror (60) according to Claim 1, further comprising a first bulb hole (62), disposed on the reflecting mirror (60), for accommodating a bulb, wherein the bulb hole (62) has at least one bump (621), formed on the periphery of the first bulb hole (62), and disposed in at least one accommodating slot (711) of a case (70), the accommodating slot (711) is disposed on the periphery of a second bulb hole (71) and at a position corresponding to the bump (621), the size of the second bulb hole (71) is larger than that of the first bulb hole (62), the first bulb hole (62) is accommodated in the second bulb hole (71), the shape of the bottom of the bump (621) matches with that of the bottom of the accommodating slot (711) such that the bump (621) leans against the accommodating slot (711), and the peripheral size of the accommodating slot (711) is larger than that of the bump (621).

12. The adjusting device (10) for the reflecting mirror (60) according to Claim 1, further comprising at least one snapping member (63), disposed on the reflecting mirror (60) and located in at least one snapping slot (72, 73) of a case (70), wherein the size of the snapping slot (72, 73) is larger than that of the snapping member (63).
